(19) Europäisches Patentamt / European Patent Office / Office européen des brevets

(11) **EP 3 534 569 A1**

(12) **EUROPEAN PATENT APPLICATION**

(43) Date of publication:
04.09.2019 Bulletin 2019/36

(51) Int Cl.:
*H04L 12/24* (2006.01)  *H04L 12/26* (2006.01)

(21) Application number: 19157301.3

(22) Date of filing: 14.02.2019

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 02.03.2018 US 201815910644

(71) Applicant: **NXP B.V.**
**5656 AG Eindhoven (NL)**

(72) Inventors:
• **SHARMA, Vibhu**
**5656 AG Eindhoven (NL)**
• **VERMEULEN, Hubertus Gerardus Hendrikus**
**5656 AG Eindhoven (NL)**

(74) Representative: **Pomper, Till**
**NXP Semiconductors**
**Intellectual Property Group**
**134 avenue Eisenhower**
**BP 72329**
**31023 Toulouse Cedex 1 (FR)**

(54) **DEVICE FOR ENSURING QUALITY OF SERVICE IN A VEHICLE**

(57) A device for proactively providing fault tolerance to a vehicle network is disclosed. The device includes a first interface to collect performance data from a plurality of network components of the vehicle network and a second interface to send reconfiguration instructions to the plurality of network components. The device may also include a database for storing the collected performance data, a processor to calculate a probability of failure of a network component in the plurality of network components based on the stored performance data.

Fig. 1

## Description

## BACKGROUND

Some mission critical systems include redundancies to prevent complete system failure when a critical component fails. For example, in an autonomously driven vehicle, a system failure could be fatal. Hence, the system should be designed such that there are sufficient redundancies built into the system to prevent a failure. The automotive industry is exploring the path towards autonomous driving. The realization of such driving functionality will constitute a paradigm shift in the reliability requirements for the communication inside a vehicle.

## SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

In one embodiment, a device for proactively providing fault tolerance to a vehicle network is disclosed. The device includes a first interface to collect performance data from a plurality of network components of the vehicle network and a second interface to send reconfiguration instructions to the plurality of network components. The device may also include a database for storing the collected performance data, a processor to calculate a probability of failure of a network component in the plurality of network components based on the stored performance data.

In another embodiment, a method for proactively identifying a potential for fault in a network component is disclosed. The method includes collecting performance data from a performance sensor incorporated in the network component, storing collected data in a storage, calculating a probability of a failure of the network component based on the stored performance data and sending reconfiguration instructions to the network component or a network domain that includes the network component to cause a reconfiguration of the network component when the probability of the failure is higher than a preselected value.

In some examples, the device includes an interface to connect to a cloud based processing system and the cloud based processing system is configured to receive performance data from a plurality of external sources relating to network components that are the same or similar to the plurality of network components. The processor is configured to receive the performance data periodically, through the first interface, from network sensors incorporated in the plurality of network components. The processor is configured to calculate a probability of failure based on the stored performance data and externally stored performance data, wherein the externally stored performance data is collected from external sources relating to network components that are similar to the plurality of network components. The processor is configured to send reconfiguration instructions to one or more of the plurality of network components via the second interface.

In some embodiments, the plurality of network components is configured to immediately change configuration settings upon receiving the reconfiguration instructions from the processor. In other embodiments, the plurality of network components is configured to locally store the received reconfiguration instructions from the processor and to make changes to configuration settings when a failure in one of the plurality of network component is imminent.

In some examples, the performance data includes one or more of data bandwidth use, memory buffer utilization, buffer queue delays, switching delays, power consumption, and frame priorities.

In yet another embodiment, a vehicle including the device described above is disclosed. The vehicle includes a plurality of sensors coupled to a plurality of network components, a sensor fusion unit coupled to the plurality of network components and a plurality of performance sensors coupled to the plurality of network components.

## BRIEF DESCRIPTION OF THE DRAWINGS

So that the manner in which the above recited features of the present invention can be understood in detail, a more particular description of the invention, briefly summarized above, may be had by reference to embodiments, some of which are illustrated in the appended drawings. It is to be noted, however, that the appended drawings illustrate only typical embodiments of this invention and are therefore not to be considered limiting of its scope, for the invention may admit to other equally effective embodiments. Advantages of the subject matter claimed will become apparent to those skilled in the art upon reading this description in conjunction with the accompanying drawings, in which like reference numerals have been used to designate like elements, and in which:

FIG. 1 depicts a schematic diagram of a sample system with proactive quality of service processor in accordance with one or more embodiments of the present disclosure; and

FIG. 2 depicts a method for proactively providing fault tolerance and correction in accordance with one or more embodiments of the present disclosure; and

Note that figures are not drawn to scale. Intermediate steps between figure transitions have been omitted so as not to obfuscate the disclosure. Those intermediate steps are known to a person skilled in the art.

## DETAILED DESCRIPTION

Many well-known manufacturing steps, components, and connectors have been omitted or not described in details in the description so as not to obfuscate the present disclosure.

It should be noted that even though the embodiments described herein use automotive systems for the ease of description, the techniques described herein may also be applied to any system that includes various components interconnected via a communication network. For example, the embodiments described herein may also be applicable to aircrafts and medical equipment.

Existing Quality-of-Service (QoS) assurance techniques for the in-vehicle network (IVN) are typically static in nature, component-centric, and configured on the vehicle's production line. For better fault tolerance and proactive correction of issues before they arise, there is a need for IVNs to dynamically cope with unforeseen circumstances, including a failure of the communication network itself or an out-of-spec usage due to a failure in another part of the vehicle. The embodiments described herein provide run-time handling of failures, as not all failure circumstances can be foreseen at design time. This heightened reliability requires a dynamic, zero-time adaptability of the IVN, in addition to the existing, pre-configured handling of the mixed-criticality communication from the different in-vehicle applications.

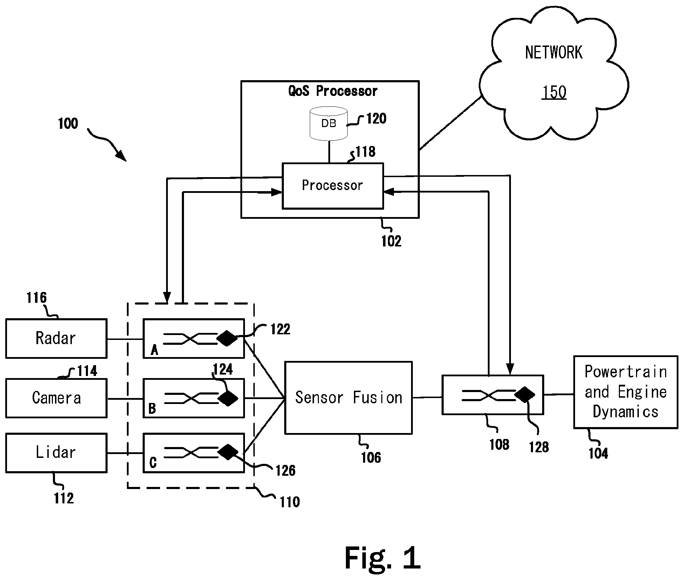

Figure 1 depicts a schematic diagram of a sample vehicle system 100 with a quality of service (QoS) processor 102. Without the QoS processor 102, any disruption in IVN links between sensors, processing and actuating units may cause an undesirable system failure. Therefore, neither the computation nor the communication function is permitted to break down, even in the presence of unforeseen circumstances. It is possible and in some instances, necessary, to implement sufficient physical and logical communication redundancy at design time to cope with the foreseen run-time circumstances. For example, both the physical links and the communication messages can be duplicated to increase the chance of their arrival at intended destinations.

However, having such extensive redundancies may make the overall system costly and may still not be sufficient to cope with unforeseen circumstances because not all circumstances may be known to the designers of the system at design time. An IVN, even with built-in redundancies, may still be missing dynamic adaption to run-time changes in usages or a capability to handle a failure in the network itself. It should be noted that Figure 1 shows a star topology only for the purpose of easy explanation. However, the embodiments described herein may be equally applied to other topologies such as but not limited to domain based and zonal architectures.

The vehicle system 100 includes various sensors, e.g., a lidar sensor 112, a camera sensor 114 and a radar sensor 116. Even though only one sensor of each type is shown in Figure 1 for the ease of illustration, in practice there may be a plurality of such sensors located throughout the vehicle that includes the vehicle system 100. Each of these sensors are coupled to a network node 110 that may include network components A, B, C for various sensors. In some embodiments, the network node 110 and the powertrain network component 108 may include redundant components and/or connections. Upon a failure detection (e.g., due to hardware failure), a redundant connection or component may be used. Each of the network components may include a performance sensor 122, 124, 126. Similarly, the vehicle system may include a powertrain network component 108 coupled to a powertrain and engine dynamics system 104. The powertrain network component 108 may include a performance sensor 128 to monitor the health and operations of the powertrain network component 108. The performance sensors 122, 124, 126 monitor the health as well as parameters such as amount of data flow, buffer use, etc. In some examples, the performance sensors 122, 124, 126, 128 may be configured to collect specific type of data based on their usage with a particular type of underlying component being monitored. For example, in some cases, parameters such as temperature, voltage, current, or a parameter that may be useful to determine the health of the underlying component may also be monitored. Simply put, the performance sensors are configured such that the underlying components provide necessary information on their own health. Further the network components are configurable components such that upon receiving a command or instruction, the network component may change its characteristics or disconnect itself from the network or include itself in the network.

Performance sensors 122, 124, 126, 128 are added to the in-vehicle communication infrastructure to monitor key communication metrics that can be indicative of a potential future communication breakdown. These sensors 122, 124, 126, 128 continuously or periodically monitor the health of the network by collecting performance information. Performance metrics that may be measured include the bandwidth utilization, buffer queue delays, switching delays, power consumption, and frame priorities. The collected information is forwarded to the QoS processor 102.

The network components 110A, 110B, 110C, 108 are also dynamically reconfigurable through reconfiguration commands from the QoS processor 102. In some examples, a network component, e.g., 110A, 110B, 110C, 108 may immediately transition from its current configuration to the new configuration when instructed by the QoS processor 102. In another example, the network component, e.g., 110A, 110B, 110C, 108 may first store the new configuration in a backup configuration registry as a preliminary reconfiguration. When a failure is imminent, the network component can then seamlessly switch to the new configuration. In yet another example, the network component, e.g., 110A, 110B, 110C, 108 may migrate from its old configuration to its new configuration over a preselected period of time, depending on its functionality and its state at the moment of receiving a reconfiguration command.

A typical network component, e.g., 110A, 110B, 110C, 108 may include a status information interface, a configuration command interface and an associated network interface to couple to the QoS processor 102. The status information interface may be a physical interface coupled with a preselected communication protocol to provide the QoS processor 102 with preselected type of information. The QoS processor 102 may use this information to learn the historical characteristics of an information sending network component based on the information supplied through this interface. The QoS processor 102 may send reconfiguration commands to the network component based on historical summaries and a probability of failure. The configuration command interface along with a preselected protocol may be provided to enable the network component to accept reconfiguration commands from the QoS processor 102 so that the network component can update its settings, update its firmware or make necessary changes in transmitting sensor data to the sensor fusion based on the command received from the QoS processor 102.

A sensor fusion 106 is includes to combine sensory data from various sensors 112, 114, 116 such that the resulting information is less uncertain than would be possible than these data from these sensors were used individually. The data sources for a fusion process are not specified to originate from identical sensors. One can distinguish direct fusion, indirect fusion and fusion of the outputs of the former two. Direct fusion is the fusion of sensor data from a set of heterogeneous or homogeneous sensors, soft sensors, and history values of sensor data, while indirect fusion uses information sources like a priori knowledge about the environment and human input. The sensor fusion 106 includes processor to perform calculations on the data collected from various sensors.

For example, let x1 and x2 denote two sensor measurements with noise variances $a_1^2$ and $a_2^2$, respectively. One way of obtaining a combined measurement x3 is to apply the Central Limit Theorem (CLT), which is also employed within the Fraser-Potter fixed-interval smoother, namely:

$$x3 = a_3{}^2(a_1{}^{-2}\ x1 + a_1{}^{-2}\ x2)$$

where $a_3^2 = a_1^{-2} + a_1^{-2}$ is the variance of the combined estimate. The fused result is a linear combination of the two measurements weighted by their respective noise variances.

In probability theory, the central limit theorem (CLT) establishes that, in most situations, when independent random variables are added, their properly normalized sum tends toward a normal distribution (informally a "bell curve") even if the original variables themselves are not normally distributed. The theorem is a key concept in probability theory because it implies that probabilistic and statistical methods that work for normal distributions can be applicable to many problems involving other types of distributions.

In some examples, other methods such as Kalman filter method, may be used for fusing the sensor data. An extensive discussion thereof is being omitted so as not to obscure the present disclosure. Note that similar statistical method may also be used by the QoS processor 102 to preprocess collected performance data and to calculate deviations over time to derive a probability of a failure.

The QoS processor 102 includes a processor 118 and a local database 120. Optionally the QoS processor may be coupled to an external network 150. If the QoS processor 102 is coupled to the external network 150, the QoS processor 102 may send and receive historical or preprocessed performance data in a database in the cloud. The QoS processor 102 may also use computational processing power at one or more computers in the cloud network coupled to the network 150. Among others, the advantage of using a cloud based central system for storing and processing raw or summarized performance data relating to sensors such that the lidar 112, the camera 114, the radar 116, the powertrain performance sensor 128 is that data from other vehicles for the same or similar sensors may be collected and a better decision may be made as to a potential of failure of a particular component proactively. For example, if more than an insignificant number of components coupled to a particular sensor has started to fail in other vehicles that are coupled to the network 150, the QoS processor 102 may take corrective actions prior to any potential failure of the same or similar component in the present vehicle. In some cases, if the operation of the particular component is not critical, at the very least, a warning signal me be provided to a user of the vehicle.

The local database 120 is used for storing data collected from performance sensors 122, 124, 126, 128. The data may be processed by the processor 118 prior to storing in the local database 120. The stored data may then be used for predicting a potential failure of a network component. The processor 118 is configured to receive the performance data from performance sensors and sending reconfiguration instructions to network components, e.g., 108, 110A, 110B, 110C based on a calculated probability of failure calculated by the processor 118 using the historical data stored in the local database 120 and/or in a cloud storage coupled to the network 150.

In some examples, the network components, e.g., 110A, 110B, 110C, 108 may periodically send performance and health information to the QoS processor 102 and the QoS processor 102 may periodically send system health information back to the network components. Communication watchdogs may additionally be used to detect a disruption in this two way communication and may signal failure to the QoS processor 102 or the network components 110A, 110B, 110C, and 108.

For easy understanding, in one example, the performance sensors 122, 124, 126, monitor the communication from the radar, camera, and lidar sensor groups to the sensor fusion 106, while network performance sensor 128 monitors the communication from the sensor fusion 106 to the powertrain and vehicle dynamics domain 104. Performance sensors monitor the amount of data generated by these sensor groups and the sensor fusion 106, and pass this information to the QoS processor 102. Sensors may also monitor the state of the physical communication medium, i.e., the wiring harness.

In case of the occurrence of an unforeseen event, such as a cable break or an error in a sensor that turns it into a babbling idiot (e.g., producing large amount of undecipherable data), the QoS processor 102 can isolate the faulty sensor group by reconfiguring the corresponding network component to apply more strictly policing the information stream from that sensor group, e.g., 110. Depending on the criticality of the individual information streams that run across the IVN, the QoS processor 102 may also dynamically change the priority of some data streams over another.

Another application scenario example is the prediction and prevention of a buffer overflow scenario. The buffer utilization value (associated counters and raising the counter value) is monitored by the performance sensors. Derivative changes to buffer utilization value over time period may also be monitored and delta change is recorded in the counter value over the defined time interval.

In some examples, the configuration (e.g., network adaptation) can be split into local action (executed at network switches of the vehicle network) versus global action (at network system level). A local action executed at the switch level can be straightforward actions depending on the counter values. However, a global action required more analysis and actions. For example, the QoS processor 102 may change the QoS level of frames coming from different sensors, depending on the potential value (e.g., redundant information) of the sensor information for a given application and decision context. The QoS level change may be implemented by raising the priority of the frames coming from high resolution sensors over low resolution one. Another level of configuration includes changing the configuration to reduce the data output traffic, enabling for example compressed sensing contrary to regular sensing, by eliminating the redundant information at the sensor level.

The QoS processor 102 may use a history of the metrics collected by the network performance sensors to detect a behavioral change that occurs more gradually over time. Rather than single values, the QoS processor 102 may use derived information, possibly obtained through inference from past behaviors of a single IVN, or from a fleet of IVNs collected through the network 150.

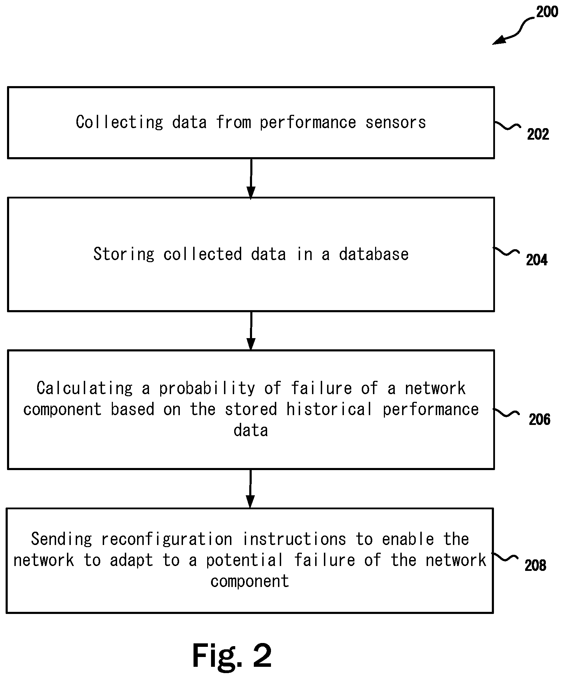

Figure 2 discloses a method 200 for proactively providing fault tolerance and correction in a vehicle network. Accordingly, at step 202, performance data is collected from a plurality of network components that include a plurality of sensors for collecting information such as data bandwidth use, memory buffer utilization, buffer queue delays, switching delays, power consumption, and frame priorities in the network components. At step 204, the performance data is stored in a database. The database may be a local database in a vehicle or a cloud based database coupled to the vehicle via the Internet or a combination thereof. At step 206, a processor calculates a probability of failure of a network component in the plurality of network component based on the stored historical performance data. At step 208, the processor sends reconfiguration instructions to cause a reconfiguration of the network component when the probability of failure of the network component is higher than a preselected and configurable threshold.

Some or all of these embodiments may be combined, some may be omitted altogether, and additional process steps can be added while still achieving the products described herein. Thus, the subject matter described herein can be embodied in many different variations, and all such variations are contemplated to be within the scope of what is claimed.

While one or more implementations have been described by way of example and in terms of the specific embodiments, it is to be understood that one or more implementations are not limited to the disclosed embodiments. To the contrary, it is intended to cover various modifications and similar arrangements as would be apparent to those skilled in the art. Therefore, the scope of the appended claims should be accorded the broadest interpretation so as to encompass all such modifications and similar arrangements.

The use of the terms "a" and "an" and "the" and similar referents in the context of describing the subject matter (particularly in the context of the following claims) are to be construed to cover both the singular and the plural, unless otherwise indicated herein or clearly contradicted by context. Recitation of ranges of values herein are merely intended to serve as a shorthand method of referring individually to each separate value falling within the range, unless otherwise indicated herein, and each separate value is incorporated into the specification as if it were individually recited herein. Furthermore, the foregoing description is for the purpose of illustration only, and not for the purpose of limitation, as the scope of protection sought is defined by the claims as set forth hereinafter together with any equivalents thereof entitled to. The use of any and all examples, or exemplary language (e.g., "such as") provided herein, is intended merely to better illustrate the subject matter and does not pose a limitation on the scope of the subject matter unless otherwise claimed. The use of the term "based on" and other like phrases indicating a condition for bringing about a result, both in the claims and in the written description, is not intended to foreclose any other conditions that bring about that result. No language in the specification should be construed as indicating any non-claimed element as essential to the practice of the invention as claimed.

Preferred embodiments are described herein, including the best mode known to the inventor for carrying out the claimed subject matter. Of course, variations of those preferred embodiments will become apparent to those of ordinary skill in the art upon reading the foregoing description. The inventor expects skilled artisans to employ such variations as appropriate, and the inventor intends for the claimed subject matter to be practiced otherwise than as specifically described herein. Accordingly, this claimed subject matter includes all modifications and equivalents of the subject matter recited in the claims appended hereto as permitted by applicable law. Moreover, any combination of the above-described elements in all possible variations thereof is encompassed unless otherwise indicated herein or otherwise clearly contradicted by context.

## Claims

1. A device for proactively providing fault tolerance to a vehicle network, the device (102) comprising:

   a first interface to collect performance data from a plurality of network components (108, 110) of the vehicle network;
   a second interface to send reconfiguration instructions to the plurality of network components;
   a processor to calculate a probability of failure of a network component in the plurality of network components based on the collected performance data.

2. The device of claim 1, further including a database (120) for storing the collected performance data.

3. The device of claim 1 or claim 2, further including an interface to connect to a cloud based processing system, which is configured to receive performance data from a plurality of external sources relating to network components that are same or similar to the plurality of network components.

4. The device of any preceding claim, wherein the processor is configured to receive the performance data periodically, through the first interface, from network sensors (122-128) incorporated in the plurality of network components.

5. The device of claim 4, wherein the processor is configured to calculate the probability of failure based on the collected performance data and externally stored performance data, wherein the externally stored performance data is collected from external sources relating to network components similar to the plurality of network components.

6. The device of claim 5, wherein the processor is configured to send reconfiguration instructions to one or more of the plurality of network components via the second interface.

7. The device of claim 6, wherein the reconfiguration instructions include instructions to the one or more of the plurality of network components to reduce data output traffic and/or changing frame priority of network frames produced by the one or more of the plurality of network components.

8. The device of claim 1, wherein the calculation of the probability of failure includes using changes in buffer utilization over a selected period of time and/or derived values from the stored performance data over the selected period of time.

9. The device of any one of the claims 6 to 8, wherein the plurality of network components is configured to immediately change configuration settings upon receiving the reconfiguration instructions from the processor or locally store the received reconfiguration instructions from the processor and to make changes to configuration settings when a failure in one of the plurality of network component is imminent.

10. The device of any preceding claim, wherein the performance data includes one or more of data bandwidth use, memory buffer utilization, buffer queue delays, switching delays, power consumption, and frame priorities.

11. A vehicle, comprising:

   the device of any preceding claim;
   a plurality of sensors coupled to a plurality of network components (108, 110);
   a sensor fusion unit (106) coupled to the plurality of network components; and
   a plurality of performance sensors (122-128) coupled to the plurality of network components.

12. A method for proactively identifying a potential for a fault in a network component (108, 110), the method comprising:

   collecting (202) performance data from a performance sensor (122-128) incorporated in the network component;
   storing (204) collected data in a storage;
   calculating (206) a probability of a failure of the network component based on the stored performance data; and

sending (208) reconfiguration instructions to the network component or a network domain that includes the network component to cause a reconfiguration of the network component when the probability of the failure is higher than a preselected value.

13. The method of claim 12, wherein the performance data includes one or more of data bandwidth use, memory buffer utilization, buffer queue delays, switching delays, power consumption, and frame priorities.

14. The method of claim 12 or claim 13, wherein the network component is configured to immediately change configuration settings upon receiving the reconfiguration instructions.

15. The method of any one of the claims 12 to 14, wherein the network component is configured to locally store the received reconfiguration instructions and to make changes to configuration settings when a failure in the network component is imminent.

Fig. 1

_200_

```
┌─────────────────────────────────────────────────┐
│                                                 │
│      Collecting data from performance sensors   │⌇ 202
│                                                 │
└─────────────────────────────────────────────────┘
                        │
                        ▼
┌─────────────────────────────────────────────────┐
│                                                 │
│       Storing collected data in a database      │⌇ 204
│                                                 │
└─────────────────────────────────────────────────┘
                        │
                        ▼
┌─────────────────────────────────────────────────┐
│                                                 │
│   Calculating a probability of failure of a network │
│  component based on the stored historical performance │⌇ 206
│                      data                       │
└─────────────────────────────────────────────────┘
                        │
                        ▼
┌─────────────────────────────────────────────────┐
│                                                 │
│   Sending reconfiguration instructions to enable the │
│  network to adapt to a potential failure of the network │⌇ 208
│                   component                     │
└─────────────────────────────────────────────────┘
```

# Fig. 2

Europäisches
Patentamt

European
Patent Office

Office européen
des brevets

# EUROPEAN SEARCH REPORT

Application Number

EP 19 15 7301

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/216889 A1 (MARKO KENNETH A [US] ET AL) 20 November 2003 (2003-11-20)<br>* page 2, paragraph 27 - page 4, paragraph 41 *<br>* page 5, paragraph 61 - page 6, paragraph 66 *<br>* figures 1, 2 * | 1-15 | INV.<br>H04L12/24<br>H04L12/26 |
| X | US 2017/006135 A1 (SIEBEL THOMAS M [US] ET AL) 5 January 2017 (2017-01-05)<br>* page 11, paragraph 152 - page 13, paragraph 164 *<br>* page 31, paragraph 324 - page 33, paragraph 341 *<br>* page 45, paragraph 437 - page 46, paragraph 444 *<br>* page 49, paragraph 477 - page 50, paragraph 488 *<br>* page 55, paragraph 523 - page 55, paragraph 528 *<br>* figures 1, 16, 17 * | 1-15 | |
| A | US 2016/266962 A1 (RAJASEKHARAN AJAYKUMAR [US] ET AL) 15 September 2016 (2016-09-15)<br>* page 2, paragraph 14 - page 4, paragraph 31 *<br>* page 6, paragraph 47 - page 7, paragraph 52 *<br>* page 7, paragraph 55 - page 7, paragraph 57 *<br>* figures 1, 2, 5, 7 * | 1-15 | TECHNICAL FIELDS SEARCHED (IPC)<br><br>H04L |
| A | WO 2015/103534 A1 (CISCO TECH INC [US]) 9 July 2015 (2015-07-09)<br>* page 4, line 29 - page 10, line 10 *<br>* page 18, line 20 - page 19, line 19 *<br>* figures 1-3, 7 * | 1-15 | |

-/--

The present search report has been drawn up for all claims

| Place of search | Date of completion of the search | Examiner |
|---|---|---|
| Munich | 26 March 2019 | Koch, György |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 19 15 7301

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2013/159240 A1 (SINGH SATNAM [IN] ET AL) 20 June 2013 (2013-06-20) * page 2, paragraph 15 - page 5, paragraph 37 * * page 9, paragraph 76 - page 10, paragraph 80 * * figures 1, 2, 6 * | 1-15 | |

TECHNICAL FIELDS
SEARCHED      (IPC)

The present search report has been drawn up for all claims

| Place of search | Date of completion of the search | Examiner |
|---|---|---|
| Munich | 26 March 2019 | Koch, György |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 19 15 7301

This annex lists the patent family members relating to the patent documents cited in the above-mentioned European search report.
The members are as contained in the European Patent Office EDP file on
The European Patent Office is in no way liable for these particulars which are merely given for the purpose of information.

26-03-2019

| Patent document cited in search report | | Publication date | Patent family member(s) | | Publication date |
|---|---|---|---|---|---|
| US 2003216889 | A1 | 20-11-2003 | DE 10319493 A1<br>GB 2388666 A<br>US 2003216889 A1 | | 27-11-2003<br>19-11-2003<br>20-11-2003 |
| US 2017006135 | A1 | 05-01-2017 | EP 3278213 A2<br>US 2017006135 A1<br>US 2018191867 A1<br>WO 2016118979 A2 | | 07-02-2018<br>05-01-2017<br>05-07-2018<br>28-07-2016 |
| US 2016266962 | A1 | 15-09-2016 | US 2016266962 A1<br>US 2017308429 A1 | | 15-09-2016<br>26-10-2017 |
| WO 2015103534 | A1 | 09-07-2015 | CN 105900378 A<br>EP 3092745 A1<br>US 2015195192 A1<br>WO 2015103534 A1 | | 24-08-2016<br>16-11-2016<br>09-07-2015<br>09-07-2015 |
| US 2013159240 | A1 | 20-06-2013 | CN 103163877 A<br>DE 102012223393 A1<br>US 2013159240 A1 | | 19-06-2013<br>20-06-2013<br>20-06-2013 |

EPO FORM P0459

For more details about this annex : see Official Journal of the European Patent Office, No. 12/82